# EUROPEAN PATENT APPLICATION

(11) **EP 2 921 541 A1**
(43) Date of publication of application: **23.09.2015**
(21) Application number: 14161111.1
(22) Date of filing: 21.03.2014
(51) Int. Cl.: C09J 175/06, C08G 18/42, C08G 18/48, C08G 18/40, C08G 18/08, C08G 18/38, C08G 18/66, C08G 18/34, C08G 18/79, C08G 18/73, C08G 18/75, C08G 18/72

(54) **Aqueous polyurethane dispersions**

(71) Applicant: Henkel AG&Co. KGAA, 40589 Düsseldorf (DE)
(72) Inventor: Zhao, Ligang, 40593 Düsseldorf (DE); De la Fuente, Verónica, 43470 Tarragona (ES); Bitinis, Natacha, 73200 Mercury (FR); Niembro, Sandra, 08210 Barcelona (ES); Del Rio, Enrique, 37764 Salamanca (ES)

(57) **Abstract**

The present invention relates to aqueous polyurethane dispersions that can be used as adhesives, in particular contact and flooring adhesives, which have low VOC emissions, are environmentally friendly, have long open times, need no heat activation and readily bond at room temperature, and have a high green and final strengths. The dispersions comprise at least one polyurethane polymer being obtainable by forming a prepolymer from a reaction mixture comprising: (a) at least one amorphous polyol; (b) optionally, at least one crystalline or semicrystalline polyol, wherein the molar ratio of the polyol (i) to the polyol (ii) is in the range of 1:4 to 10:1; (c) at least one stabilizer; and (d) at least one polyisocyanate; and reacting the thus obtained prepolymer with at least one chain extension agent to obtain the polyurethane polymer. Also encompassed are processes for the production of such dispersions and their use as adhesives.

## Description

The present invention relates to aqueous polyurethane dispersions that can be used as adhesives, in particular contact and flooring adhesives, which have low VOC emissions, are environmentally friendly, have long open times, need no heat activation and readily bond at room temperature, and have a high green and final strengths. Also encompassed are processes for their production, (adhesive) compositions containing them and their use as adhesives.

Contact adhesives are traditionally based on solvent-based polychloroprene formulations. However, these have the disadvantage of having high volatile organic compound (VOC) emissions upon drying and thus are toxicologically and environmentally undesirable. Although aqueous polychloroprene dispersions have been developed, these have the drawbacks decreased bonding performance and long drying times. Other systems, such as water-based ethyl vinyl acetate copolymer systems have been investigated, but usually need the additional of tackifier resins to obtain the desired properties.

Aqueous polyurethane (PU) dispersions are acquiring increasing technical and economic significance because they are toxicologically and ecologically safer than polyurethanes in organic solvents. However, although existing systems have been shown to have good adhesive properties, they usually require a heat activation which renders them unsuitable for contact adhesives. Known cold contact PU adhesives, such as those described in US 5,624,758 A and WO 2013/053786 A1 either require additives, such as plasticizers and other polar polymers, or have short open times. Accordingly, there exists need in the art for alternative formulations that overcome these drawbacks.

The present invention meets this need by providing a cold contact adhesive formulation based on an aqueous polyurethane dispersion that has excellent adhesive properties and long open times. The invention is based on the inventors' finding that by using a specific polyol mixture during formation of the prepolymer the properties of the resulting PU dispersions with respect to adhesive performance and open time can be significantly improved.

In a first aspect, the present invention thus relates to an aqueous polyurethane dispersion comprising at least one polyurethane polymer, wherein the polyurethane polymer is obtainable by forming a prepolymer from a reaction mixture comprising:
(a) at least one amorphous polyol, preferably polyester polyol, with a number average molecular weight Mₙ in the range of 400 g/mol to 5000 g/mol, a crystallinity of less than 10 % and a glass transition temperature T_{g} in the range of -30°C to 40°C, preferably -5°C to 30°C, the crystallinity and the glass transition temperature as determined by differential scanning calorimetry (DSC) according to DIN65467 at a heating rate of 20 K/min;
(b) optionally, at least one crystalline or semicrystalline polyol, preferably polyester polyol, with a number average molecular weight Mₙ in the range of 400 g/mol to 5000 g/mol, a crystallinity of at least 50 % and a melting temperature TM in the range of 40°C to 80°C, the crystallinity and the melting temperature as determined by differential scanning calorimetry (DSC) according to DIN65467 at a heating rate of 20 K/min, wherein the molar ratio of the polyol (i) to the polyol (ii) is in the range of 1:3 to 10:1;
(c) at least one stabilizer; and
(d) at least one polyisocyanate, preferably at least one aliphatic di- and/or triisocyanate; and
   reacting the thus obtained prepolymer with at least one chain extension agent to obtain the polyurethane polymer.

In another aspect, the invention relates to a process for the preparation of a polyurethane prepolymer, the process comprising:
(a) providing a mixture of at least one amorphous polyol, preferably polyester polyol, with a number average molecular weight Mₙ in the range of 400 g/mol to 5000 g/mol, a crystallinity of less than 10 % and a glass transition temperature T_{g} in the range of -30°C to 40°C, preferably -5°C to 30°C, the crystallinity and the melting temperature as determined by differential scanning calorimetry (DSC) according to DIN65467 at a heating rate of 20 K/min; optionally, at least one crystalline or semicrystalline polyol, preferably polyester polyol, with a number average molecular weight Mₙ in the range of 400 g/mol to 5000 g/mol, a crystallinity of at least 50 % and a melting temperature TM in the range of 40°C to 80°C, the crystallinity and the melting temperature as determined by differential scanning calorimetry (DSC) according to DIN65467 at a heating rate of 20 K/min, wherein the molar ratio of the polyol (i) to the polyol (ii) is in the range of 1:4 to 10:1; and at least one stabilizer, preferably a diol; and
(b) adding at least one polyisocyanate, preferably at least one aliphatic di- and/or triisocyanate, in molar excess relative to the combined molar amount of the polyols, the OH/NCO equivalent ratio preferably being 1:1.1 to 1:4, to the mixture according to (i) and reacting it with the polyols to form the polyurethane prepolymer.

In still another aspect, the present invention is directed to the polyurethane prepolymer obtainable according to the above-described process.

In a still further aspect, the present invention relates to a process for the preparation of an aqueous polyurethane dispersion as described herein, comprising
(a) dispersing, preferably emulsifying, the polyurethane prepolymer according to the afore-mentioned aspect of the invention in water to form a prepolymer dispersion;
(b) adding a chain extension agent containing at least two terminal NCO-reactive groups to said prepolymer dispersion; and
(c) reacting the chain extension agent with the prepolymer, and optionally removing any organic solvent present, to form the aqueous polyurethane dispersion.

Also encompassed by the present invention is the thus obtainable aqueous polyurethane dispersion.

In another aspect, the invention also relates to adhesive compositions, preferably contact or flooring adhesive compositions, comprising the aqueous polyurethane dispersions herein or obtained according to the herein described processes.

In a still further aspect, the invention is directed to the use of the aqueous polyurethane dispersion or the adhesive composition as described herein as a contact or flooring adhesive.

The present invention is directed to aqueous polyurethane dispersions which have been produced by reacting a specific mixture of polyol components with polyisocyanates to provide a PU prepolymer and dispersing, usually emulsifying, said prepolymer in water and extending it with a suitable chain extension agent. The prepolymer is formed by reacting a mixture of at least one amorphous polyol, preferably polyester polyol, and at least one stabilizer with at least one polyisocyanate.

The amorphous polyols used herein are preferably polyester polyols and/or have a number average molecular weight Mₙ in the range of 400 g/mol to 5000 g/mol, preferably 500 to 3000 g/mol, more preferably 800-2500 g/mol, most preferably 1000 to 2000 g/mol. "Amorphous", as used herein in relation to the (polyester) polyols, means that the (polyester) polyol has a crystallinity of less than 10 %, preferably less than 5 %, more preferably less than 2 %, as determined by differential scanning calorimetry (DSC) according to DIN65467 at a heating rate of 20 K/min. The amorphous (polyester) polyols furthermore have a glass transition temperature T_{g} in the range of - 30°C to 40°C, preferably -5°C to 30°C, again as determined by differential scanning calorimetry (DSC) according to DIN65467 at a heating rate of 20 K/min. Below the glass transition temperature, amorphous polymers are brittle and rigid. This property is due to the immobility of the "frozen" polymer chains. When the glass transition temperature is exceeded the molecular chains become movable relative to one another and the polymer softens, the degree of softening depending on the type of the polymer, the molecular weight of the polymer and the temperature. Amorphous polymers, as compared with (semi-)crystalline polymers, show only a glass stage in the DSC measurement according to DIN65467 during the transition from the brittle, rigid state to the softened state. A melt peak indicating a semi-crystallinity of the polymer does not occur in the DSC measurements.

The number average molecular weight Mₙ is calculated based on end group analysis (OH numbers according to DIN 53240). The weight average molecular weight M_{w} is determined by gel permeation chromatography according to DIN 55672-1:2007-08 with THF as the eluent.

The amorphous polyester polyol may be obtained by the polycondensation of dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phtalic acid, isophtalic acid, trimellitic acid, phtalic anhydre, tetrahydrophtalic anhydre, glutaric anhidre, maleic acid, maleic anhidre, fumaric acid, dimeric fatty acid and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-otaneglycol cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol. Preferred are esters of neopentylglycol (2,2-dimethyl-1,3-propanediol), 1,4-butanediol or 1,6-hexanediol with phthalic acid (anhydride).

The terms "one or more" or "at least one", as exchangeably used herein, relate to at least one or one or more, i.e. 1, 2, 3, 4, 5, 6, 7, 8, 9 or more. "At least one", as used herein in relation to any of the components, such as the polyols and the polyisocyanates, refers to the number of chemically different molecules, i.e. to the number of different types of the referenced species, but not to the total number of molecules. For example, "at least one amorphous polyester polyol" means that at least one type of molecule falling within the definition for amorphous polyester polyols is used but that also two or more different molecule types falling within this definition can be present, but does not mean that only one molecule of said amorphous polyester polyols is present.

The reaction mixture can additionally comprise other polyols, including but not limited to at least one crystalline or semicrystalline (polyester) polyol. Said crystalline or semicrystalline polyester polyol is preferably a polyester polyol and may have a number average molecular weight Mₙ in the range of 400 g/mol to 5000 g/mol, preferably 500 to 3000 g/mol, more preferably 800-2500 g/mol, most preferably 1000 to 2000 g/mol. "Crystalline", as used herein in relation to the (polyester) polyols, relates to a crystallinity of at least 90%, preferably at least 95%, as determined by differential scanning calorimetry (DSC) according to DIN65467 at a heating rate of 20 K/min. Similarly, "semicrystalline", as used herein in relation to the (polyester) polyols, means that they have a crystallinity of at least 50 %, preferably at least 70 %, but less than 90%. Semicrystalline (polyester) polyols thus comprise crystalline and non-crystalline, i.e. amorphous, regions.

The crystalline and semicrystalline (polyester) polyols useful in the described mixtures may have a melting temperature TM in the range of 40°C to 80°C, preferably 40 to 60°C, again as determined by differential scanning calorimetry (DSC) according to DIN65467 at a heating rate of 20 K/min.

In embodiments, where a combination of amorphous (polyester) polyols and crystalline/semicrystalline (polyester) polyols is used, the molar ratio of the (polyester) polyol (i) to the (polyester) polyol (ii) may be in the range of 1:4 to 10:1, preferably 1:3 to 5:1, more preferably 1:2 to 2:1.

The crystalline/semicrystalline polyester polyol may be obtained by the polycondensation of dicarboxylic acids with polyols. The dicarboxylic acids may be aliphatic, cycloaliphatic or aromatic and/or their derivatives such as anhydrides, esters or acid chlorides. Specific examples of these are succinic acid, glutaric acid, adipic acid, pimelic acid, suberic acid, azelaic acid or sebacic acid, phtalic acid, isophtalic acid, trimellitic acid, phtalic anhydre, tetrahydrophtalic anhydre, glutaric anhidre, maleic acid, maleic anhidre, fumaric acid, dimeric fatty acid and dimethyl terephthalate. Examples of suitable polyols are monoethylene glycol, 1,2-propanediol, 1,3-propanediol, 1,4-butanediol, 3-methylpentane-1,5-diol, neopentyl glycol (2,2-dimethyl-1,3-propanediol), 1,6-hexanediol, 1,8-otaneglycol cyclohexanedimethanol, 2-methylpropane-1,3-diol, dithyleneglycol, triethyleneglycol, tetraethyleneglycol, polyethyleneglycol, dipropyleneglycol, polypropyleneglycol, polypropyleneglycol, dibutyleneglycol and polybutyleneglycol.. Preferred are esters of 1,4-butanediol with adipic acid.

It is preferred that the amorphous as well as the crystalline/semicrystalline polyol are polyester polyols.

The reaction mixture may comprise further polyols, in particular diols. Such diols may be monomeric diols, such as 1,4-butanediol.

The reaction mixture further comprises at least one stabilizer. The term "stabilizer", as used herein, relates to a class of molecules that can stabilize the droplets in a dispersion or emulsion, i.e. prevent coagulation or coalescence. The stabilizer molecules may adhere to or associate with the droplet surface. In various embodiments the stabilizer molecules comprise a hydrophilic and a hydrophobic part, with the hydrophobic part interacting with the droplet and the hydrophilic part be exposed to the solvent. The stabilizers may be surfactants and may bear an electric charge, for example may be anionic surfactants or cationic surfactants. Alternatively, they are non-ionic. However, due to the increased stability provided, it is preferred to use stabilizer compounds that are built into the polyurethane polymer during (pre)polymer formation and thus provide for self-emulsifiable polyurethanes which spontaneously form stable dispersions in water without the assistance of external emulsifiers and intensive shear forces.

Therefore, in various preferred embodiments, the at least one stabilizer comprises or consists of a polyol, preferably a diol, or a mixture of different polyols and/or diols. Preferred diols are glycols, such as ethylene glycol, propylene glycol, butylene glycol, neopentyl glycol and the like and polymers thereof, such as polyethylene glycol, polypropylene glycol, and polybutylene glycol and copolymers of ethylene glycol, propylene glycol, and butylene glycol, preferably of ethylene glycol and propylene glycol. The average molecular weight M_{w} of such polymeric stabilizers is preferably in the range of up to about 4000 g/mol, preferably up to about 3000 g/mol, more preferably up to about 2000 g/mol.

While the afore-mentioned stabilizers are non-ionic, they may be modified by anionic or cationic groups. The presence of such charged groups may increase the stability of the dispersed polymer droplets or particles. Suitable anionic groups include, but are not limited to acidic groups, such as carboxylic acid or sulfonic acid groups and their respective salts. Concrete compounds suitable as anionic stabilizers in the sense of the present invention are 2,2-bis(hydroxymethyl)propionic acid (dimethylol propionic acid; DMPA) and sulfonated polydiols with a molecular weight M_{w} in the range of up to 1000 g/mol, preferably up to 500 g/mol. Such sulfonated polydiols, for example propoxylated 1-methyl-2-methylol-3-hydroxy-1-propanesulfonate with a molecular weight M_{w} of about 430 g/mol, are commercially available under the name GS-7Q (Yedang G & Co. Ltd).

Suitable cationic groups include, but are not limited to ammonium groups, in particular quaternary ammonium groups. Particularly preferred are alkoxylated, preferably ethoxylated or propoxylated, dialkylammonium diols, such as ethoxylated cocoalkylmethyl ammonium methanesulfonate. Such compounds are commercially available under the trademark name Rewoquat® CPEM from Evonik.

In preferred embodiments of the invention, the at least one stabilizer is a mixture of polyols, preferably diols, more particularly a mixture of at least one non-ionic diol/polyol and at least one anionic or cationic diol/polyol. In one specific embodiment, the mixture comprises at least one ethyleneglycol/propyleneglycol copolymer with a molecular weight M_{w} of up to 3000 g/mol and at least one anionic diol, such as DMPA or a sulfonated polydiol. In another specific embodiment, the mixture comprises at least one ethyleneglycol/propyleneglycol copolymer with a molecular weight M_{w} of up to 3000 g/mol and at least one quaternary ammonium diol, such as Rewoquat® CPEM.

In such mixtures the weight ratio of non-ionic to ionic stabilizer usually ranges from about 1:1 to about 4:1.

The term "reaction mixture", as used herein, relates to the mixture of the polyol(s), the stabilizer(s) and the polyisocyanate(s). "Polyol mixture", as used herein in relation to the mixture comprising the amorphous (polyester) polyols, relates to a mixture comprising the at least one amorphous (polyester) polyol and the at least one stabilizer and, optionally, the at least one crystalline/semicrystalline (polyester) polyol and any additional polyols that may be present. In preferred embodiments, the stabilizer is preferably also a diol or polyol, as described above.

It is preferred that the reaction mixture does not contain any organic solvents and no further additives, i.e. consists of polyols, preferably those defined above, and the stabilizers.

In various embodiments, the polyol mixture comprises about 20 to about 99 wt.-%, preferably 30 to 90 wt.-%, of the amorphous (polyester) polyol relative to the weight of the polyol mixture. If present, the crystalline/semicrystalline (polyester) polyol may be comprised in amounts of up to 80 wt.-% relative to the weight of the polyol mixture. The stabilizer is usually contained in amounts of about 1 to 10 wt.-%, preferably 4 to 8 wt.-%, relative to the weight of the polyol mixture. If a mixture of stabilizing compounds is employed, ionic stabilizers may be used in amounts of 0.5 to 5 wt.-% and non-ionic stabilizers in amounts of 3 to 6 wt.-% relative to the polyol mixture.

The final reactant employed in the formation of the polyurethane prepolymer is a polyisocyanate. Any compound which includes at least two isocyanate groups is within the contemplation of the present invention. It is preferable, however, that the polyisocyanate be a diisocyanate. The incorporation of small amounts of isocyanate with a functionality higher than two, in particular a triisocyanate, is also contemplated and may under certain circumstances even be advantageous. Such polyisocyanates can act as cross-linkers. In this case, polyisocyanates based on hexamethylene diisocyanate are preferred. Suitable diisocyanates include, without limitation, methylenediphenyl diisocyanate (MDI), toluene-2,4-diisocyanate (TDI), hexamethylene diisocyanate (HDI), polymeric diphenylmethane diisocyanate (PMDI), isophorone diisocyanate (IPDI), methylene-4,4-bis(cyclohexyl)diisocyanate (H12MDI) and mixtures thereof. Although both aliphatic and aromatic polyisocyanates are within the contemplation of the present invention, it is preferred that the polyisocyanate be an aliphatic polyisocyanate. Thus, in a particularly preferred embodiment, the polyisocyanate is an aliphatic diisocyanate. Among particularly preferred aliphatic diisocyanates are isophorone diisocyanate, hexamethylene diisocyanate, and mixtures thereof. In particularly preferred embodiments, the at least one polyisocyanate is a mixtures of one or more diisocyanates, preferably HDI and/or IPDI, and one or more polyisocyanates, preferably one triisocyanate. Suitable polyisocyanates are, for example, commercially available under the trademark name Desmodur® from Bayer AG (DE). Particularly preferred is Desmodur® N3300.

The polyisocyanate may be used in molar excess relative to the combined molar amount of all polyols present in the reaction mixture, the OH/NCO equivalent ratio preferably being 1:1.1 to 1:4, more preferably 1:1.2 to 1:1.3. The amount of the at least one polyisocyanate in the reaction mixture is typically in the range of 10 to 20 wt.-% relative to the reaction mixture. The remainder may be made up by the polyol mixture, as defined above.

Providing the polyol mixture may include the step of mixing the at least one polyol and the stabilizers and heating the mixture. The heating may be required in case the polyols employed are solid at room temperature and need to be melted to form the polyol mixture. In preferred embodiments, the at least one polyol and the at least one stabilizer are combined and heated to about 70 to 95°C, for example about 75°C, while stirring the mixture under vacuum to dry. After the mixing, the mixture may be cooled to 60°C for the addition of the isocyanates.

The polyol mixture is subsequently combined with at least one polyisocyanate in the reaction mixture to form the prepolymer. The prepolymer reaction usually occurs at elevated temperature, preferably in the range of between about 70 °C and about 95 °C, more preferably about 85 °C, over a period of between about 2 and about 5 hours, preferably for about 3 hours. The reaction is typically carried out in the presence of a catalyst that is added, preferably a tin-based catalyst, more preferably dibutyltin dilaurate (DBTDL). In preferred embodiments of the invention, the reaction mixture thus further comprises a catalyst as defined above.

The reaction continues until the free isocyanate content reaches or comes very close to the calculated value, as determined by standard titration with dibutylamine. Preferred values for the free isocyanate content in the prepolymer are in the range between 0.2 and 2 wt.-%, preferably 0.6 to 1.3 wt.-% relative to the total amount of polyols, including the stabilizer(s), and polyisocyanate in the mixture.

"About", as used herein, relates to ± 10 %, preferably ± 5 % of the numerical value to which it refers. "About 70 °C" thus relates to 70 ± 7, preferably 70 ± 3.5 °C.

The polyurethane dispersion prepolymer-forming reaction may further be characterized by the polyisocyanate being reacted in a concentration in excess of the stoichiometric concentration required to completely react with the hydroxyl groups. The excess used may include an OH/NCO equivalent ratio of 1:1.1 to 1:4. Preferably, the amount of the polyisocyanate is 20 % to 150 % in excess of the stoichiometric concentration required to completely react with the hydroxyl groups. Moreover, the at least one stabilizer is present in a concentration sufficient to provide adequate stability to the polyurethane dispersion in water, i.e. between about 1 and 20 mol-%, preferably between 3 and 6 mol-% relative to the combined molar amount of the at least one polyol and the at least one polyisocyanate.

Once the free isocyanate content reaches the predetermined value, as defined above, the temperature may be reduced, for example to about 60 °C. Subsequently, the formed prepolymer may be dissolved in a suitable organic solvent, including, without limitation, acetone. If acetone is used as a solvent, it may be used in an acetone/prepolymer weight ratio of about 40-50:50-60.

In various embodiments, the prepolymer may be neutralized at this stage by using a suitable neutralization agent. In case an anionic acidic stabilizer is used, an amine base, such as triethylamine may be used.

The thus formed prepolymer may then be dispersed in water, for example under vigorous agitation. In various embodiments, the prepolymer is used in form of a solution of the prepolymer in an organic solvent, with the solution then being emulsified in water. The dispersing step may be carried out at elevated temperature, for example in the range of about 30 to 60 °C, for example at about 40 °C. The dispersing step may be done by mechanical stirring alone or by dispersing devices, such as microfluidizers or rotor-stator dispersing machines, such as an ultra-turrax device.

Subsequently, the aqueous polyurethane dispersion is formed by reacting the isocyanate endgroups of the prepolymer with an appropriate chain extender containing at least two terminal NCO-reactive groups, for example a diamine, such as hydrazine, an alkylene diamine or cycloalkylene diamine, preferably ethylene diamine, isophorone diamine, piperazine, or polyetheramine, to produce a stable aqueous cationic polyurethane dispersion. Diols, such as an alkyldiol, including but not limited to 1,4-butanediol and 2-butyl-2-ethyl-1,3-propanediol, or water can also be used. The chain extension reaction may be performed until total conversion of the isocyanate groups, i.e. the chain extension agent is continuously added until free isocyanate groups are no longer detectable. The presence of a catalyst and higher temperature may also be required. Preferred chain extension agents useful according to the present invention include ethylene diamine, water, 2-butyl-2-ethyl-1,3-propanediol, and/or a polyetherdiamine.

After chain extension, potentially present organic solvent, such as acetone, may be removed, for example by evaporation in a rotary evaporator.

The aqueous polyurethane dispersion formed preferably has a solid content of 10 to 70 wt.-%, preferably 30 to 60 wt.-%. The viscosity is preferably in the range of 100 to 10000 mPas, preferably 2000 to 6000 mPas as determined by a Brookfield viscosimeter, spindle 4, 20rpm. The viscosity may be adjusted to suit the desired application form by adding a thickener. Suitable viscosity adjusting and thickening agents are well-known in the art. One specific example are PU-based thickeners, typically used in amounts of 1-5 phr.

The present invention also relates to a process for the preparation of a polyurethane prepolymer as described above, the process comprising:
(a) providing a mixture of at least one amorphous polyol, preferably polyester polyol, with a number average molecular weight Mₙ in the range of 400 g/mol to 5000 g/mol, a crystallinity of less than 10 % and a glass transition temperature T_{g} in the range of -30°C to 40°C, preferably -5°C to 30°C, the crystallinity and the melting temperature as determined by differential scanning calorimetry (DSC) according to DIN65467 at a heating rate of 20 K/min; optionally, at least one crystalline or semicrystalline polyol, preferably polyester polyol, with a number average molecular weight Mₙ in the range of 400 g/mol to 5000 g/mol, a crystallinity of at least 50 % and a melting temperature TM in the range of 40°C to 80°C, the crystallinity and the melting temperature as determined by differential scanning calorimetry (DSC) according to DIN65467 at a heating rate of 20 K/min, wherein the molar ratio of the polyol (i) to the polyol (ii) is in the range of 1:3 to 10:1; and at least one stabilizer, preferably a diol; and
(b) adding at least one polyisocyanate, preferably at least one aliphatic di- and/or triisocyanate, in molar excess relative to the combined molar amount of the polyols, the OH/NCO equivalent ratio preferably being 1:1.1 to 1:4, to the mixture according to (i) and reacting it with the polyols to form the polyurethane prepolymer.

In various embodiments of said process, step a) and/or step b) includes heating the mixture. This heating procedure has already been described in more detail above.

The reaction with the polyisocyanate may be carried out in the presence of a catalyst, so that in various embodiments, step b) comprises adding a catalyst, preferably a tin-based catalyst, more preferably dibutyltin dilaurate (DBTDL).

As described above, after step b) the prepolymer can be dissolved in an organic solvent, preferably acetone, optionally in an acetone/prepolymer ratio of about 40-50:50-60 wt.-%.

In a next step, the prepolymer (solution) may be dispersed, preferably emulsified, in water or an aqueous solution consisting essentially of water, i.e. more than 80 wt.-% are water, to form a prepolymer dispersion. The following steps of adding a chain extension agent containing at least two terminal NCO-reactive groups to said prepolymer dispersion and reacting the chain extension agent with the prepolymer, and optionally removing any organic solvent present, to form the aqueous polyurethane dispersion have already been described in greater detail above.

It is generally preferred that the chain extension reaction is carried out until total conversion of the isocyanate groups. The conversion can be monitored by techniques well-established in the art, for example IR spectroscopy.

As already mentioned above, the prepolymers and polyurethane dispersions obtainable by the described processes form also part of the present invention.

The aqueous polyurethane dispersions may then be used as an adhesive, in particular a contact of flooring adhesive or may be used as part of an adhesive composition, preferably contact or flooring adhesive compositions. Such adhesive compositions can contain further ingredients all of which are well-known in the field.

The adhesives can be used to bond two substrates to each other, with the two substrates being made of a variety of different materials. For example, suitable substrates include, without limitation, wood, high pressure laminate, ABS, leather, and various floor covering materials, such as rubber, carpeting or linoleum. The adhesives bond at room temperature, with drying times in the range of 15-45 minutes, preferably 20-30 minutes, depending on the substrate. They show high green strength and have open times of up to 48 hours, typically up to 24 hours.

The adhesives can be applied to the substrate by all known techniques, including without limitation, spraying, dip-coating, spin-coating, printing and the like.

The following examples are given to illustrate the present invention. Because these examples are given for illustrative purposes only, the invention should not be deemed limited thereto.

### Examples

### Example 1: Preparation of the polyurethane dispersion

A round bottom flask equipped with a mechanical stirrer and a condenser was charged with the polyols. The mixture was heated to 75 °C (bath temperature) until obtaining a homogenous medium. The mixture was dried for 1-2 h under vacuum and was left to cool to 60 °C having the probe inside the flask. The isocyanates were then added to the reaction mixture. The catalyst was added (DBTDL catalyst) and the mixture was heated to 85 °C. Then, the reaction was left for 3 h at 85 °C. When the free NCO content was in the range of between 0.2 to 3 wt%, relative to the amount of polyols and polyisocyantes in the mixture, the temperature was reduced to 60 °C.

Acetone was then added in two steps and stirred to obtain a clear solution. The amount of acetone added is fixed so the acetone/pre-polymer ratio is of 44/56 wt.-%. In the case of the anionic formulation, triethylamine was then added in acetone in order to neutralize the acid implemented in the PUD chain with DMPA.

To produce the emulsion, warm water (50 wt.-% of the acetone/pre-polymer mixture) was added to the flask under vigorous mechanical stirring for 10 min at 40 °C.

The chain extension was carried out by adding a diamine or dialcohol in water until the disappearance of the peak corresponding to the NCO detected by infra-red sprectroscopy. Finally the acetone was removed in the rotaevaporator.

The viscosity of the dispersion was adjusted by use of a PU-based thickener (Borchigel L75N) in a concentration of 2- 3 phr.

The components used for the formation of the dispersion are listed in the following Table 1.

**Table 1: Components used for PU dispersion preparation**

| **Component** | **eq.Mw** | **E1 (wt.%)** | **E2 (wt.%)** | **E3 (wt.%)** | **E4 (wt.%)** | **E5 (wt.%)** |
|---|---|---|---|---|---|---|
| Adipic acid/butylene glycol polyester polyol (Realkyd XTR 20112, Arkema) | 2000 | 37.73 | 26.23 | - | 26.81 | - |
| Adipic acid/butylene glycol polyester polyol (Realkyd XTR 10110, Arkema) | 1000 | - | 25.30 | - | 25.86 | - |
| 1,6- hexanediol-phthalic anhydride-based polyester polyol (Stepanpol PH-56, Stepan) | 2000 | - | 25.35 | 82.87 | 25.91 | 81.43 |
| Neopentyl glycol-phthalic anhydride-based polyester polyol (Stepanpol PH-110, Stepan) | 1000 | 37.73 | - | - | | |
| Anionic stabilizer (sulfonated polyol; GS-7Q) | 420 | - | - | 0.97 | 1.21 | - |
| Anionic stabilizer (DMPA) | 134.10 | - | - | 0.48 | 0.61 | - |
| Cationic stabilizer (Rewoquat CPEM, Evonik) | 550 | 4.19 | 3.95 | - | - | 3.17 |
| Nonionic stabilizer (poly(oxypropylene, oxyethylene) glycol, HN-8200) | 2000 | 5.14 | 4.84 | 3.95 | 4.95 | 3.89 |
| Triisocyanate (1,6-hexamethylene diisocyanate based polyisocyanate; Desmodur N3300, Bayer) | 504 | 0.44 | 0.41 | 0.34 | 0.42 | 0.33 |
| Isophorone diisocyanate | 220 | 6.92 | 6.52 | 5.33 | 6.66 | 5.23 |
| Hexamethylene diisocyanate | 168 | 7.86 | 7.40 | 6.05 | 7.57 | 5.95 |

### Example 2: Tensile test results

Test pieces are sorted in pairs so that the bonding areas match precisely together. The adhesive is applied to the test pieces using the serrated spatula on a surface of 1000 mm² (50 x 20 mm). The two matching pieces are covered with adhesive longwise and crosswise, respectively. After the drying time, the two matching bonding areas are connected carefully aligned by the mark and fixed by slightly pressing them together manually. Test pieces are then pressed with clamps for two minutes. Tensile tests have been performed in an Instron machine at a cross-head speed of 20 mm.min⁻¹. The initial strength refers to the value obtained immediately after pressing while the final strength is measured after 5/7 days of storage. Three samples of each formulation have been systematically tested. The average tensile strength values are shown in Tables 2 and 3.

**Table 2**

| | **Initial tensile strength (MPa)** | | | **Final tensile strength after 5 days (MPa)** | | |
|---|---|---|---|---|---|---|
| | **Wood** | **HPL-wood** | **ABS** | **Wood** | **HPL-wood** | **ABS** |
| E1 | 0.49 ± 0.10 | 0.24 ± 0.05 | 0.24 ± 0.15 | 1.87 ± 0.81 | 1.90 ± 0.22 | 0.74 ± 0.08 |
| E2 | 0.88 ± 0.07 | 0.34 ± 0.07 | 0.17±0.07 | 1.62 ± 0.30 | 0.98 ± 0.14 | 1.07 ± 0.02 |
| E3 | 0.70 ± 0.09 | 0.38 ± 0.04 | 0.26 ± 0.01 | 1.40 ± 0.08 | 1.05 ± 0.07 | 0.55 ± 0.01 |

**Table 3**

| | **Initial tensile strength (MPa)** | | **Final tensile strength (MPa) after 7 days** | |
|---|---|---|---|---|
| | **Wood-rubber** | **Wood-Fitted Carpet** | **Wood-rubber** | **Wood-Fitted Carpet** |
| E3 | 0.35 ± 0.03 | 0.21 ± 0.04 | 0.67 ± 0.04 | 0.40 ± 0.01 |
| E4 | 0.31 ± 0.04 | 0.36 ± 0.03 | 0.76 ± 0.002 | 0.86 ± 0.13 |
| E5 | 0.32 ± 0.01 | 0.07 ± 0.04 | 0.53 ± 0.05 | 0.23 ± 0.005 |

It was found that it is possible to work with open time of 24 hours for Example 3 and 5 without affecting the tensile strength results.

## Claims

1. Aqueous polyurethane dispersion comprising at least one polyurethane polymer, the polyurethane polymer being obtainable by forming a prepolymer from a reaction mixture comprising:
(a) at least one amorphous polyol, preferably polyol, preferably polyester polyol" with a number average molecular weight Mₙ in the range of 400 g/mol to 5000 g/mol, a crystallinity of less than 10 % and a glass transition temperature T_{g} in the range of -30°C to 40°C, preferably -5°C to 30°C, the crystallinity and the glass transition temperature as determined by differential scanning calorimetry (DSC) according to DIN65467 at a heating rate of 20 K/min;
(b) optionally, at least one crystalline or semicrystalline polyol, preferably polyester polyol, with a number average molecular weight Mₙ in the range of 400 g/mol to 5000 g/mol, a crystallinity of at least 50 % and a melting temperature TM in the range of 40°C to 80°C, the crystallinity and the melting temperature as determined by differential scanning calorimetry (DSC) according to DIN65467 at a heating rate of 20 K/min, wherein the molar ratio of the polyol (i) to the polyol (ii) is in the range of 1:4 to 10:1.
(c) at least one stabilizer; and
(d) at least one polyisocyanate, preferably at least one aliphatic di- and/or triisocyanate; and
reacting the thus obtained prepolymer with at least one chain extension agent to obtain the polyurethane polymer.

2. Aqueous polyurethane dispersion according to claim 1, wherein the at least one amorphous polyol
(1) has a molecular weight Mₙ of about 1000 to 2000 g/mol; and/or
(2) comprises or consists of a polyester polyol selected from the group consisting of polyesters of a diol with phthalic acid (anhydride), preferably esters of neopentylglycol (2,2-dimethyl-1,3-propanediol) or 1,6-hexanediol with phthalic acid (anhydride).

3. Aqueous polyurethane dispersion according to claim 1 or 2, wherein the at least one crystalline or semicrystalline polyol
(1) has a molecular weight Mₙ of about 1000 to 2000 g/mol; and/or
(2) comprises or consists of a polyester polyol selected from the group consisting of polyesters of a diol with adipic acid, preferably esters of 1,4-butanediol with adipic acid.

4. Aqueous polyurethane dispersion according to any one of claims 1 to 3, wherein the at least one stabilizer comprises or consists of
(1) a diol; and/or
(2) an anionic stabilizer and optionally a nonionic stabilizer or a cationic stabilizer and optionally a nonionic stabilizer.

5. Aqueous polyurethane dispersion according to any claim 4, wherein
(1) the anionic stabilizer is an dihydroxy acid, preferably a sulfonated polyglycol and/or 2,2-bis(hydroxymethyl)propionic acid (DMPA);
(2) the cationic stabilizer is an ammonium diol, preferably a quaternary ammonium diol; and/or
(3) the nonionic stabilizer is a polyoxyalkylene glycol, preferably polyethylene glycol, polypropylene glycol or polyethylene/polypropylene glycol.

6. Aqueous polyurethane dispersion according to any one of claims 1 to 5, wherein
(1) The polyisocyanate is used in molar excess relative to the combined molar amount of the polyols, the OH/NCO equivalent ratio preferably being 1:1.1 to 1:4, and/or
(2) the at least one polyisocyanate is at least one diisocyanate or triisocyanate, preferably selected from the group consisting of isophorone diisocyanate (IPDI), hexamethylene diisocyanate (HDI), polymeric polyisocyanates based on IPDI or HDI, and mixtures thereof.

7. Aqueous polyurethane dispersion according to any one of claims 1 to 6, wherein the chain extension agent is water, a diol or a diamine, preferably hydrazine, an alkylene diamine, a cycloalkylene diamine, an alkyldiol, or a polyetherdiamine, more preferably ethylene diamine, water, 2-butyl-2-ethyl-1,3-propanediol, or a polyetherdiamine.

8. Aqueous polyurethane dispersion according to any one of claims 1 to 7, wherein the reaction mixture further comprises a catalyst, preferably a tin-based catalyst, more preferably dibutyltin dilaurate (DBTDL).

9. Aqueous polyurethane dispersion according to any one of claims 1 to 8, wherein dispersion has
(1) a solid content of 10 to 70 wt.-%, preferably 30 to 60 wt.-%; and/or
(2) a viscosity of 100 to 10000 mPas, preferably 2000 to 6000 mPas as determined by a Brookfield viscosimeter, spindle 4, 20rpm.

10. Process for the preparation of a polyurethane prepolymer, the process comprising:
(a) providing a mixture of at least one amorphous polyol, preferably polyester polyol, with a number average molecular weight Mₙ in the range of 400 g/mol to 5000 g/mol, a crystallinity of less than 10 % and a glass transition temperature T_{g} in the range of -30°C to 40°C, preferably -5°C to 30°C, the crystallinity and the melting temperature as determined by differential scanning calorimetry (DSC) according to DIN65467 at a heating rate of 20 K/min; optionally, at least one crystalline or semicrystalline polyol, preferably polyester polyol, with a number average molecular weight Mₙ in the range of 400 g/mol to 5000 g/mol, a crystallinity of at least 50 % and a melting temperature TM in the range of 40°C to 80°C, the crystallinity and the melting temperature as determined by differential scanning calorimetry (DSC) according to DIN65467 at a heating rate of 20 K/min, wherein the molar ratio of the polyol (i) to the polyol (ii) is in the range of 1:3 to 10:1; and at least one stabilizer, preferably a diol; and
(b) adding at least one polyisocyanate, preferably at least one aliphatic di- and/or triisocyanate, in molar excess relative to the combined molar amount of the polyols, the OH/NCO equivalent ratio preferably being 1:1.1 to 1:4, to the mixture according to (i) and reacting it with the polyols to form the polyurethane prepolymer.

11. The process according to claim 10, wherein
(1) step a) and/or step b) includes heating the mixture; and/or
(2) step b) further comprises adding a catalyst, preferably a tin-based catalyst, more preferably dibutyltin dilaurate (DBTDL); and/or
(3) after step b) the prepolymer is dissolved in an organic solvent, preferably acetone, optionally in an acetone/prepolymer ratio of about 40-50:50-60 wt.-%

12. Polyurethane prepolymer obtainable according to a process of claim 10 or 11.

13. Process for the preparation of an aqueous polyurethane dispersion according to any one of claims 1-9, comprising
(a) dispersing, preferably emulsifying, a polyurethane prepolymer according to claim 12 in water to form a prepolymer dispersion;
(b) adding a chain extension agent containing at least two terminal NCO-reactive groups to said prepolymer dispersion; and
(c) reacting the chain extension agent with the prepolymer, and optionally removing any organic solvent present, to form the aqueous polyurethane dispersion.

14. The process according to claim 13, wherein step c) is performed until total conversion of the isocyanate groups.

15. Aqueous polyurethane dispersion obtainable according to the process of claim 13 or 14.

16. Adhesive composition, preferably contact or flooring adhesive composition, comprising the aqueous polyurethane dispersion according to any one of claims 1 to 8 or 15.

17. Use of the aqueous polyurethane dispersion according to any one of claims 1 to 8 or 15 or the adhesive composition according to claim 16 as a contact or flooring adhesive.
